(19) **Europäisches Patentamt / European Patent Office / Office européen des brevets**

(11) **EP 4 605 717 B1**

(12) **EUROPEAN PATENT SPECIFICATION**

(45) Date of publication and mention
of the grant of the patent:
**05.08.2026  Bulletin 2026/32**

(21) Application number: **23818244.8**

(22) Date of filing: **20.10.2023**

(51) International Patent Classification (IPC):
***G01G 23/01*** (2006.01)     ***G01G 23/14*** (2006.01)
***G01G 23/00*** (2006.01)

(52) Cooperative Patent Classification (CPC):
**G01G 23/01; G01G 23/14;** G01G 23/002

(86) International application number:
**PCT/CN2023/125749**

(87) International publication number:
**WO 2024/083243 (25.04.2024 Gazette 2024/17)**

(54) **A METHOD FOR LEVEL CORRECTION OF A LOAD CELL IN A WEIGHING SYSTEM**

VERFAHREN ZUR LAGEKORREKTUR EINER WÄGEZELLE IN EINEM WÄGESYSTEM

PROCÉDÉ DE CORRECTION DE NIVEAU D'UNE CELLULE DE CHARGE DANS UN SYSTÈME DE PESAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.10.2022  CN 202211293686**

(43) Date of publication of application:
**27.08.2025  Bulletin 2025/35**

(73) Proprietors:
  • **Mettler-Toledo (Changzhou) Precision Instruments Ltd.**
    **Changzhou, Jiangsu 213125 (CN)**
  • **Mettler Toledo (Changzhou) Measurement Technology Ltd.**
    **Changzhou, Jiangsu 213125 (CN)**
  • **Mettler-Toledo Technologies (China) Co., Ltd**
    **Shanghai 201306 (CN)**

(72) Inventors:
  • **WANG, Shenhui**
    **Changzhou, Jiangsu 213125 (CN)**
  • **GU, Jun**
    **Changzhou, Jiangsu 213125 (CN)**
  • **YANG, Li**
    **Changzhou, Jiangsu 213125 (CN)**
  • **WU, Jianwei**
    **Changzhou, Jiangsu 213125 (CN)**
  • **YANG, Jianqiang**
    **Changzhou, Jiangsu 213125 (CN)**
  • **ZHAO, Yupeng**
    **Changzhou, Jiangsu 213125 (CN)**
  • **CAI, Jinjie**
    **Changzhou, Jiangsu 213125 (CN)**
  • **GUO, Zheng**
    **Changzhou, Jiangsu 213125 (CN)**
  • **LI, Chunhui**
    **Changzhou, Jiangsu 213125 (CN)**
  • **ZHANG, Song**
    **Changzhou, Jiangsu 213125 (CN)**

(74) Representative: **Mettler-Toledo**
**IP Department**
**Im Langacher 44**
**8606 Greifensee (CH)**

(56) References cited:
**JP-A- 2013 253 834     JP-B2- 5 679 852**

**Description**

BACKGROUND OF THE INVENTION

Technical Field

The present invention relates to the field of weighing systems, and in particular, to the methods for level correction of load cells in a weighing system.

Background Art

A weighing system comprising at least three load cells or weighing modules, where the amount of force exerted on each of these load cells or weighing modules might vary, that is, the load cells or the weighing modules are not in an evenly levelled state. As a result, there might be a difference between an actual force exerted on a load cell than an ideal force that has to be exerted on the load cell or weighing module, which in turn affects the performance of the weighing system.

For the foregoing problem, a gasket is usually inserted or removed from the load cell to change a height of the load cell or weighing module. In this way, a load carried by the load cell or weighing module under less force is increased, and an excess force exerted on another load cell or weighing module is reduced. In this way, the load cell or weighing module is maintained in an evenly levelled state, to ensure the accuracy of the weighing system.

Currently, there are two methods for correcting the level of the load cell or weighing module. According to a first method, the level of the load cell or weighing module is manually corrected by a skilled personnel based on an output of the load cell or weighing module. According to a second method, the level of the load cell or weighing module is corrected based on the output of the load cell or weighing module and ideal characteristic data of the weighing system.

In both the above-mentioned methods, when a structure of the weighing system is simple or a when there only a few load cells or weighing modules, the level correction of the load cell or weighing module can be performed in less time and in a less laborious manner. However, when the structure of the weighing system is complex, particularly in a situation of complex field devices, it is more complicated and difficult to obtain the ideal characteristic data of the weighing system and correct the level of the load cell or the weighing module.

Relevant prior art patent documents for the present invention are JP 5 679852B2 and JP 2013 253834 A.

SUMMARY

An objective of the present invention is to provide a method for level correction of a load cell in a weighing system which is more convenient and less time consuming.

To achieve the foregoing objective, the method for correcting a level of load cell in a weighing system for weighing an object, includes steps of:

- obtaining an actual load value $w_i$ from N load cells and performing a summation of the actual load values obtained from the N load cells;

- calculating centre of mass $C_x$ and $C_y$ of the object in an X direction and a in Y direction based on position coordinates $x_i$ and $y_i$ respectively of the N load cells;

- selecting an $i^{th}$ load cell having an ideal load value of $Wt_1$ from the N load cells and expressing the ideal load value $Wt_i$ of the (N-1) load cells in terms of the ideal load value $Wt_1$;

- calculating the ideal load value $Wt_i$ of each load cell according to a proportional relationship of a summation of the ideal load values $\sum_{i=1}^{N} Wt_i$ of the N load cells to the summation of the actual load values $\sum_{i=1}^{N} w_i$ of the N load cells, wherein the proportional relationship is based on a principle that the centre of mass of the object when placed on a horizontal plane is constant; and

- calculating a load difference $\triangle wi$ between the ideal load value $Wt_i$ and the actual load value $w_i$ of each of the N load cells, and if determining the load difference $w_i$ of each of the N load cells and output an instruction for correcting the level of the load cells.

The ideal load value refers to a load value of a load exerted on the weighing modules when the weighing system is in an ideal status, i.e., the weighing system is manufactured and assembled exactly as per the design specifications, and then the assembled system is calibrated and tested for compliance.

In one or more embodiments, the centre of mass of the object in the X direction and the Y direction is computed by

$$C_x = \frac{\sum w_i \cdot x_i}{\sum w_i} \quad \text{and} \quad C_y = \frac{\sum w_i \cdot y_i}{\sum w_i}$$

, where $C_x$ indicates the centre of mass of the object in the X direction , $C_y$ indicates the centre of mass of the object in the Y direction, $w_i$ indicates an actual load value of a load cell, $x_i$ indicates a position coordinate of the load cell in the X direction, $y_i$ indicates a position coordinate of the load cell in the Y direction, and $i$ indicates the $i^{th}$ load cell.

In one or more embodiments, the centre of mass of the object in the X direction and the Y direction by using the ideal load value $Wt_i$ of the load cell is computed by $C_x = \frac{\sum Wt_i \cdot x_i}{\sum Wt_i}$ and $C_y = \frac{\sum Wt_i \cdot y_i}{\sum Wt_i}$ , where $C_x$ indicates the centre of mass of the object in the X direction, $C_y$ indicates the centre of mass of the object in the Y direction, $Wt_i$ indicates an ideal load value of a load cell, $x_i$ indicates a position coordinate of the load cell in the X direction, $y_i$ indicates a position coordinate of the load cell in the Y direction, and $i$ indicates the $i^{th}$ load cell.

In one or more embodiments, the proportional relationship between the summation of the ideal load values $\sum_{i=1}^{N} Wt_i$ and the summation of the actual load values $\sum_{i=1}^{N} w_i$ is denoted as $\Sigma w_i = \Sigma Wt_i$, where $Wt_i$ indicates an ideal load value of each of the N load cells, $w_i$ indicates an actual load value of each of the N load cells, and $i$ indicates an $i^{th}$ load cell.

In one or more embodiments, the ideal load value $Wt_i$ is expressed based on the ideal load value $Wt_1$ of the selected load cell as $Wt_i = Wt_1 + K_x(x_i - x_1) + K_y(y_i - y_1)$, where $K_x$ indicates an inclination coefficient of a load cell plane in the X direction, $K_y$ indicates an inclination coefficient of the load cell plane in the Y direction, $x_i$ indicates a position coordinate of a load cell in the X direction, $y_i$ indicates a position coordinate of the load cell in the Y direction, $i$ indicates an $i^{th}$ load cell, $Wt_1$ indicates an ideal load value of an $i^{th}$ load cell selected from the N load cells, and $Wt_i$ indicates the ideal load value of the (N-1) load cells.

In one or more embodiments, the ideal load value $Wt_i$ of the N load cells is calculated based on the proportional relationship and the principle that the centre of mass of the object on a horizontal plane is constant. Here, the inclination coefficient $Kx$ in the X direction, the inclination coefficient $Ky$ in the Y direction, and the ideal load value $Wt_1$ of the selected load cell of the N load cells are first calculated, and the step is repeated for calculating the ideal load value $Wti$ of all the (N-1) load cells based on the inclination coefficient $Kx$ in the X direction, the inclination coefficient $Ky$ in the Y direction, and the ideal load value $Wt_1$ of the selected $ith$ load cell of the N load cells.

In one or more embodiments, the inclination coefficient $Kx$ in the X direction, the inclination coefficient $Ky$ in the Y direction, and the ideal load value $Wt1$ of the selected load cell are obtained by solving the following set of equations:

$$\begin{cases} \sum w_i = \sum_{i=1}^{N} Wt_i \\ C_x = \dfrac{\sum_{i=1}^{N} Wt_i \cdot x_i}{\sum_{i=1}^{N} Wt_i} \\ C_y = \dfrac{\sum_{i=1}^{N} Wt_i \cdot y_i}{\sum_{i=1}^{N} Wt_i} \\ Wt_i = Wt_1 + K_x(x_n - x_1) + K_y(y_n - y_1) \end{cases}$$

In one or more embodiments, the load difference between the ideal load value and the actual load value of each load cell is calculated by $\Delta w_i = Wt_i - w_i$, where $\triangle w_i$ indicates the load difference of each of the N load cells, $Wti$ indicates an ideal load value of each load cell, $wi$ indicates an actual load value of each load cell, and $i$ indicates an $ith$ load cell.

In one or more embodiments, a gasket is installed for a load cell where the load difference value has a least negative value.

Preferably, the gasket is installed either between the weighing module and the object to be weighed, or between the load cell and upper plate of the weighing module. In most cases, a lifting jack can be used to lift the object to be weighed, and then the gasket is installed in a desired position. These positions are exemplary and the gasket can be installed in other position based on the requirements and as per the convenience.

In one or more embodiments, the N load cells of the weighing system represents at least three load cells.

According to the level correction method for a weighing system, the principle that the centre of mass of the object in a horizontal plane is constant is used, the ideal load value of each load carrying sensor is directly calculated based on load cell data obtained from the weighing module on site and a set of theoretical formula, and the load difference between the ideal load value and the actual load of each load cell which is used as the instruction data for adjustment of the weighing system. In this way, a level correction process is simplified, a evenly levelled status of the load cell or weighing module is conveniently and quickly achieved, and performance of the weighing system is improved.

The features, properties, and advantages of the present invention will become clearer through the following description with reference to the accompanying drawing and embodiments, in which:

Fig. 1    is a partial exploded view of the weighing system, which shows the installation position of the gasket in one embodiment.

Fig. 2    is a flowchart of an embodiment of a method of level correction for a weighing system.

BRIEF DESCRIPTION OF THE DRAWINGS

The present invention will be further described below with reference to specific embodiments and accompanying drawings. In the following description, more details are illustrated to facilitate a full understanding of the present invention, but it will be understood that the present invention can be implemented in a variety of ways different from this description, and those skilled in the art can make similar extensions and interpretations based on practical applications without departing from the scope of the present invention. Therefore, the scope of protection of the present invention should not be limited by the content of the specific embodiments.

It should be noted that the drawings are merely examples and not drawn to scale, and should not be construed as limiting the scope of protection actually claimed by the present invention.

A weighing system of the invention is configured to weigh an object that is heavy such as a bucket or an electric appliance. The weighing system comprises of N load cells, and the load cells are required to be in a evenly levelled state, to ensure accuracy of weighing the object. However, it is currently inconvenient to adjust a level of the load cell or weighing module. According to a method of level correction for a weighing system in the present disclosure, the above correction process can be simplified, and the levelled status of the load cell or weighing module can be conveniently and quickly ensured.

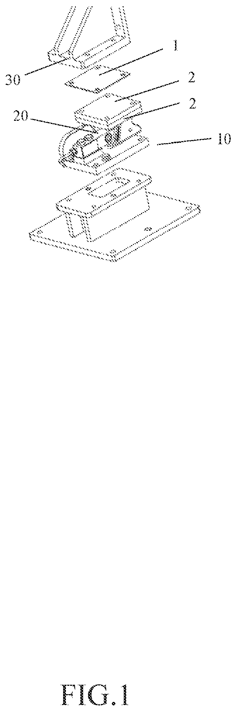

As shown in Fig. 1, the weighing module 10 comprises a load cell 20 and an upper plate 1 located above the load cell 20. The top surface of the upper plate 1 is in contact with the bottom of the object to be weighed 30, when the object is loaded onto the load cell 20 of the weighing module 10 for weighing. In this embodiment, gaskets 2 can be placed on the top surface of the load cell 20 and between the load cell 20 and the upper plate 1 to evenly level the weighing module 10. The number of gaskets 2 can be increased or decreased according to the required height. In this embodiment, two gaskets are used as an example, but one or more gaskets can be used by those skilled in the art. In other embodiments, gaskets 2 can also be placed in other suitable locations, such as between the upper plate 1 and the object to be weighed 30.

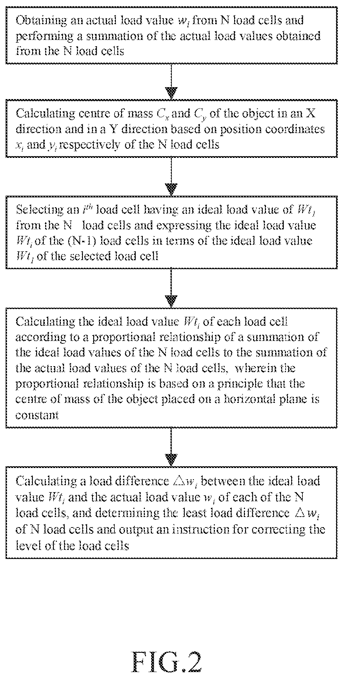

As shown in FIG. 2, the method for correcting the level of one or more load cells in a weighing system, includes the following steps. It should be noted that step arrows in the accompanying drawing merely describe an example process of an embodiment, and do not necessarily form sequential logic of the method.

First, obtaining an actual load value $w_i$ from N load cells and performing a summation of the actual load values $\sum_{i=1}^{N} w_i$ obtained from the N load cells, then calculating centre of mass $C_x$ and $C_y$ of the object in an X direction and a Y direction based on position coordinates $xi$ and $yi$ of the N load cells respectively. The X direction is orthogonal to the Y direction. For example, the actual load values $wi$ of the N load cells and the corresponding position coordinates $x_i$ in the X direction and $yi$ in the Y direction on a horizontal plane are separately obtained, and a weighing load value and the centre of mass of the object are calculated based on the foregoing actual load value of each load cell.

Specifically, the centre of mass of the object is computed by $C_x = \dfrac{\sum w_i \cdot x_i}{\sum w_i}$ and $C_y = \dfrac{\sum w_i \cdot y_i}{\sum w_i}$, where $Cx$ indicates the centre of mass of the object in the X direction, $Cy$ indicates the centre of mass of the object in the Y

direction, $w_i$ indicates an actual load value of a load cell, $x_i$ indicates a position coordinate of the load cell in the X direction, $y_i$ indicates a position coordinate of the load cell in the Y direction, and $i$ indicates the $i$th load cell.

In some embodiments, the weighing system includes at least three load cells. A value of N is greater than or equal to 3.

After calculating the centre of mass Cx and Cy using the actual load value $w_i$, an ith load cell with actual load value $Wt_1$ is selected load cell. Then, the ideal load value $Wt_i$ of the (N-1) load cells is expressed in terms of an ideal load value $Wt_1$ of the selected load cell . This step is based on the principle of the mathematical and mechanical model of the weighing system. The load cell or weighing module measures force based on the deformation, so that the force exerted may be considered as an elastic force. The weighing system is in an ideal state, therefore the deformation of each load cell is coplanar. The ideal load value $Wt_i$ of the (N-1) load cells is expressed in terms of the inclination coefficients $Kx$ and $Ky$ of a plane, and the ideal load value $Wt1$ of the selected load cell, as $Wt_i = Wt_1 + K_x(x_i - x_1) + K_y(y_i - y_1)$.

For example, if the actual load value of the selected $i$th load is $Wt_1$, then an ideal load value of a second load cell of the (N-1) load cells denoted as $Wt_2$ is expressed in terms of $Wt_1$ as $Wt_2 = Wt_1 + K_x(x_2 - x_1) + K_y(y_2 - y_1)$.

In a similar way, the ideal load value of a third load cell of the (N-2) load cells denoted as $Wt_3$ is expressed in terms of $Wt_1$ as $Wt_3 = Wt_1 + (x_3 - x_1) + K_y(y_3 - y_1)$. It is to be understood that an ideal load value of the ith load cell in terms of $Wt_1$ is $Wt_i = Wt_1 + K_x(x_i - x_1) + K_y(y_i - y_1)$, where $Wt1$, $Kx$, and $Ky$ are all unknowns.

It should be noted that $w_i$ is an actually measured load on the load cell, and $Wt_i$ is the ideal load value of the ideal characteristic data of the load cell calculated based on positions of the measured centre of mass of an object.

After the ideal load value of each load cell is obtained, a next step is performed where the ideal load values of each load cell is calculated based on a principle that a summation of the ideal load values of the N load cells is equal to the summation of the actual load value, and a principle that the centre of mass of the object on a horizontal plane is constant.

When a level of the load cell or weighing module is corrected, only a distribution of weighing force exerted on the load cells or weighing modules is usually corrected, and the weighing force is kept as a constant. Therefore, considering an ideal load value, the relationship of the summation of the ideal load value $\sum_{i=1}^{N} Wt_i$ and the summation of the actual load value $\sum_{i=1}^{N} w_i$ is expressed as $$\sum w_i = \sum Wt_i.$$

In addition, the positions of the centre of mass of the object on the horizontal plane is considered as constant, so correcting the level of the load cell or weighing module usually does not affect the position of the centre of mass of the object in the X direction and the Y direction. Based on this principle, the centre of mass of the object in the X direction and the Y direction calculated in terms of the ideal load value $Wti$ of the load cell is equivalent to the centre of mass of the object in the X direction and the Y direction in terms of the actual load value $w_i$ of the load cell.

The centre of mass of the object in the X direction and the Y direction in terms of the ideal load value $Wti$ of the load cell is computed by $$C_x = \frac{\sum Wt_i \cdot x_i}{\sum Wt_i} \quad \text{and} \quad C_y = \frac{\sum Wt_i \cdot y_i}{\sum Wt_i},$$ which can be expressed in terms of the actual load value $w_i$ and expressed as $$C_x = \frac{\sum Wt_i \cdot x_i}{\sum Wt_i} = \frac{\sum w_i \cdot x_i}{\sum wt_i}, \quad \text{and} \quad C_y = \frac{\sum Wt_i \cdot y_i}{\sum Wt_i} = \frac{\sum wt_i \cdot y_i}{\sum wt_i}.$$

After the foregoing equations are obtained, the ideal load value of each load cell is calculated based on the relationship between the summation of the ideal load values of the N load cells and the summation of the actual load values of the N load cells , and the principle that the centre of mass of the object is constant on a horizontal plane, where the inclination coefficient $Kx$ in the X direction, the inclination coefficient $Ky$ in the Y direction, and the ideal load value $Wt1$ of the selected load cell are first calculated.

Specifically, the inclination coefficient $Kx$ in the X direction, the inclination coefficient $Ky$ in the Y direction, and the ideal load value $Wt1$ of the selected load cell are obtained by solving the following equation set:

$$\left\{ \begin{array}{l} \sum w_i = \sum_{i=1}^{N} Wt_i \\[2ex] C_x = \dfrac{\sum_{i=1}^{N} Wt_i \cdot x_i}{\sum_{i=1}^{N} Wt_i} \\[3ex] C_y = \dfrac{\sum_{i=1}^{N} Wt_i \cdot y_i}{\sum_{i=1}^{N} Wt_i} \\[3ex] Wt_i = Wt_1 + K_x(x_n - x_1) + K_y\left(y_n - y_1\right) \end{array} \right.$$

The relational expression $Wt_i = Wt_1 + K_x(x_i - x_1) + K_y(y_i - y_1)$ is substituted into the three equations to obtain a linear equation set of three unknowns, including the foregoing equation set about the inclination coefficient $Kx$ in the X direction, the inclination coefficient $Ky$ in the Y direction, and the ideal load value $Wt1$ of the selected load cell. For example, if there are three load cells i.e., N=3, the obtained linear equation set of three unknowns is:

$$\left\{ \begin{array}{l} \sum w_i = Wt_1 + Wt_2 + Wt_3 \\[2ex] C_x = \dfrac{Wt_1 \cdot x_1 + (Wt_1 + K_x(x_2 - x_1) + K_y(y_2 - y_1))x_2 + (Wt_1 + K_x(x_3 - x_1) + K_y(y_3 - y_1))x_3}{Wt_1 + Wt_2 + Wt_3} \\[3ex] C_y = \dfrac{Wt_1 \cdot y_1 + (Wt_1 + K_x(x_2 - x_1) + K_y(y_2 - y_1))y_2 + (Wt_1 + K_x(x_3 - x_1) + K_y(y_3 - y_1))y_3}{Wt_1 + Wt_2 + Wt_3} \end{array} \right.$$

After calculating the inclination coefficient $Kx$ in the X direction, the inclination coefficient $Ky$ in the Y direction, and the ideal load value $Wt1$ of the selected load cell, calculating the ideal load value $Wt_i$ of the (N-1) load cells, that is, an ideal load of the (N-1) load cells based on the three variables and using $Wt_i = Wt_1 + K_x(x_i - x_1) + K_y(y_i - y_1)$.

It should be noted that $Wt1$ is the ideal load value of the selected load cell.

After the ideal load value of each load cell is obtained, a load difference between the ideal load value and the input load value of each of the load cell is finally calculated, and the load difference of each load cell is used for assessment to output an instruction for correcting the level of any of the load cell.

In this step, the actual load value is subtracted from the ideal load value to obtain the instruction data for adjusting the level of the load cell. The load difference between the ideal load value and the actual load value of each load cell is $\triangle w_i = Wt_i - w_i$, where $\triangle wi$ indicates the load difference of each load cell.

Correcting the level of the load cell is correcting $\triangle wi$ which has to be minimum. For example, a gasket is installed for a load cell having a load difference value $\triangle wi$ in which is a least negative value. In this way, the load difference value $\triangle wi$ of any of the load cells in the weighing system in a maximum negative Prange is reduced, to finally make the actual input value $wi$ being consistent with the ideal load value $Wti$.

It should be noted that the least negative value of the load difference is a value that satisfies two conditions that the load difference $\triangle wi$ is negative and an absolute value of the load difference $\triangle wi$ is maximum.

Therefore, according to the foregoing method, based on measurement of the positions of the centre of mass, the positions of the centre of mass of the measured object are obtained based on values measured by the load cells, and the ideal state of the load cell/weighing module is created based on information about the positions of the centre of mass of the weighed object and a deformation-based weighing principle of the load cell/weighing module, so that the system is defined by homogeneous equations rather than overdetermined equations to obtain the ideal load of each load cell/weighing module. A difference between an ideal output and a current actual output of each load cell/weighing module is used for instructing to correct the level of the load cell/weighing module without the interference from an experienced personnel, and for a plurality of field devices in a complex situation, the load cell can be conveniently, easily, and quickly corrected under the instructions. This helps reduce labor costs for correction, reduce correction time, and further improve performance of the weighing system.

**Claims**

1. A method for level correction of at least a load cell in a weighing system, wherein said weighing system configured to weigh an object, **characterized in that** the method comprises steps of:

   a. obtaining an actual load value $w_i$ from N load cells and performing a summation of the actual load values obtained from the N load cells;
   b. calculating centre of mass $C_x$ and $C_y$ of the object in an X direction and in a Y direction based on position coordinates $x_i$ and $y_i$ respectively of the N load cells;

   **characterized by**:

   c. selecting an $i^{th}$ load cell having an ideal load value of $Wt_1$ from the N load cells and expressing the ideal load value $Wt_i$ of the (N-1) load cells in terms of the ideal load value $Wt_1$ of the selected load cell;
   d. calculating the ideal load value $Wt_i$ of each load cell according to a proportional relationship of a summation of the ideal load values $\sum_{i=1}^{N} Wt_i$ of the N load cells to the summation of the actual load values $\sum_{i=1}^{N} w_i$ of the N load cells, wherein the proportional relationship is based on a principle that the centre of mass of the object placed on a horizontal plane is constant; and
   e. calculating a load difference $\triangle wi$ between the ideal load value $Wt_i$ and the actual load value $w_i$ of each of the N load cells, and determining the least load difference $\triangle wi$ of N load cells and output an instruction for correcting the level of the load cells.

2. The method according to claim 1, **characterized in that** the centre of mass of the object in the X direction and the Y direction is computed by $C_x = \dfrac{\sum w_i \cdot x_i}{\sum w_i}$ and $C_y = \dfrac{\sum w_i \cdot y_i}{\sum w_i}$, wherein $C_x$ indicates the centre of mass of the object in the X direction, $C_y$ indicates the centre of mass of the object in the Y direction, $w_i$ indicates an actual load value of a load cell, xi indicates a position coordinate of the load cell in the X direction, $y_i$ indicates a position coordinate of the load cell in the Y direction, and $i$ indicates the $ith$ load cell.

3. The method according to claim 1, **characterized in that** the centre of mass of the object in the X direction and the Y direction by using the ideal load value $Wt_i$ of the load cell is computed by $C_x = \dfrac{\sum Wt_i \cdot x_i}{\sum Wt_i}$ and $C_y = \dfrac{\sum Wt_i \cdot y_i}{\sum Wt_i}$, wherein $C_x$ indicates the centre of mass of the object in the X direction, $C_y$ indicates the centre of mass of the object in the Y direction, $Wt_i$ indicates an ideal load value of a load cell, $x_i$ indicates a position coordinate of the load cell in the X direction, $y_i$ indicates a position coordinate of the load cell in the Y direction, and $i$ indicates the $i^{th}$ load cell.

4. The method according to claim 1, **characterized in that** the proportional relationship between the summation of the ideal load value $\sum_{i=1}^{N} Wt_i$ and the summation of the actual load value $\sum_{i=1}^{N} w_i$ is denoted as $\Sigma w_i = \Sigma Wt_i$, wherein $Wt_i$ indicates an ideal load value of each of the N load cells, w indicates an actual load value of each of the of N load cells, and i indicates an $i^{th}$ load cell.

5. The method according to claim 1, **characterized in** the ideal load value $Wt_i$ is expressed based on the ideal load value $Wt_1$ as $Wt_i = Wt_1 + K_x(x_i - x_1) + K_y(y_i - y_1)$, wherein $K_x$ indicates an inclination coefficient of a load cell plane in the X direction, $K_y$ indicates an inclination coefficient of the load cell plane in the Y direction, $x_i$ indicates a position coordinate of a load cell in the X direction, $y_i$ indicates a position coordinate of the load cell in the Y direction, $i$ indicates an $i^{th}$ load cell, $Wt_i$ indicates an ideal load value of the selected load cell, and $Wt_i$ indicates the ideal load value of the (N-1) load cells.

6. The method according to claim 5, **characterized in that** the method of calculating the ideal load value $Wt_i$ of each of the (N-1) load cells comprises computing the inclination coefficient $K_x$ in the X direction, the inclination coefficient $K_y$ in the Y direction, and the ideal load value $Wt_1$ of the selected load cell, and then repeating the computing step till all the

ideal load values $Wt_i$ of the (N-1) load cells are calculated.

7. The method according to claim 6, **characterized in that** the inclination coefficient $K_x$ in the X direction, the inclination coefficient $K_y$ in the Y direction, and the ideal load value $Wt_1$ of the load cell are obtained by solving an equation set, wherein the equation set is denoted as:

$$
\begin{cases}
\sum w_i = \sum_{i=1}^{N} Wt_i \\[2mm]
C_x = \dfrac{\sum\limits_{i=1}^{N} Wt_i \cdot x_i}{\sum\limits_{i=1}^{N} Wt_i} \\[4mm]
C_y = \dfrac{\sum\limits_{i=1}^{N} Wt_i \cdot y_i}{\sum\limits_{i=1}^{N} Wt_i} \\[4mm]
Wt_i = Wt_1 + K_x(x_n - x_1) + K_y(y_n - y_1)
\end{cases}
$$

8. The method according to claim 1, **characterized in that** a load difference between the ideal load value and the actual load value of each of the N load cells is computed by $\triangle w_i = Wt_i - w_i$, wherein $\triangle w_i$ indicates the load difference of each the N load cells, $Wt_i$ indicates an ideal load value of each of the N load cells, $w_i$ indicates an actual load value of each of the N load cells, and $i$ indicates an $i^{th}$ load cell.

9. The method according to claims 1 and 8, **characterized in that** a gasket is installed for a load cell having a load difference with a lowest value.

10. The method according to claim 1, **characterized in that** the N load cells of the weighing system represent at least three load cells.

**Patentansprüche**

1. Verfahren zur Nivellierungskorrektur mindestens einer Wägezelle in einem Wägesystem, wobei das Wägesystem zum Wägen eines Gegenstands ausgelegt ist, **dadurch gekennzeichnet, dass** das Verfahren folgende Schritte umfasst:

   a. Ermitteln eines tatsächlichen Lastwerts $w_i$ aus N Wägezellen und Durchführen einer Summierung der aus den N Wägezellen ermittelten tatsächlichen Lastwerte;
   b. Berechnen des Massenschwerpunkts $C_x$ und $C_y$ des Gegenstands in einer X-Richtung bzw. in einer Y-Richtung basierend auf Positionskoordinaten $x_i$ bzw. $y_i$ der N Wägezellen;

   **gekennzeichnet durch**:

   c. Auswählen einer *i-ten* Wägezelle mit einem idealen Lastwert von $Wt_1$ aus den N Wägezellen und Ausdrücken des idealen Lastwerts $Wt_i$ der (N-1) Wägezellen in Bezug auf den idealen Lastwert $Wt_1$ der ausgewählten Wägezelle;
   d. Berechnen des idealen Lastwerts $Wt_i$ jeder Wägezelle gemäß einer proportionalen Beziehung zwischen einer Summierung der idealen Lastwerte $\sum_{i=1}^{N} Wt_i$ der N Wägezellen und der Summierung der tatsächlichen Lastwerte $\sum_{i=1}^{N} w_i$ der N Wägezellen, wobei die proportionale Beziehung auf einem Prinzip basiert, dass der Massenschwerpunkt des auf einer horizontalen Ebene platzierten Gegenstands konstant ist; und
   e. Berechnen einer Lastdifferenz $\triangle w_i$ zwischen dem idealen Lastwert $Wt_i$ und dem tatsächlichen Lastwert $w_i$ jeder der N Wägezellen und Bestimmen der kleinsten Lastdifferenz $\triangle w_i$ der N Wägezellen und Ausgabe einer Anweisung zum Korrigieren der Nivellierung der Wägezellen.

2. Verfahren nach Anspruch 1, **dadurch gekennzeichnet, dass** der Massenschwerpunkt des Gegenstands in der X-Richtung und der Y-Richtung durch $C_x = \frac{\sum w_i \cdot x_i}{\sum w_i}$ und $C_y = \frac{\sum w_i \cdot y_i}{\sum w_i}$ berechnet wird, wobei $C_x$ den Massen-schwerpunkt des Gegenstands in der X-Richtung bezeichnet, $C_y$ den Massenschwerpunkt des Gegenstands in der Y-Richtung bezeichnet, $w_i$ einen tatsächlichenlastwert einer Wägezelle bezeichnet, xi eine Positionskoordinate der Wägezelle in der X-Richtung bezeichnet, $y_i$ eine Positionskoordinate der Wägezelle in der Y-Richtung bezeichnet und *i* die *i-te* Wägezelle bezeichnet.

3. Verfahren nach Anspruch 1, **dadurch gekennzeichnet, dass** der Massenschwerpunkt des Gegenstands in der X-Richtung und der Y-Richtung unter Verwendung des idealen Lastwerts $Wt_i$ der Wägezelle durch $C_x = \frac{\sum Wt_i \cdot x_i}{\sum Wt_i}$ und $C_y = \frac{\sum Wt_i \cdot y_i}{\sum Wt_i}$ berechnet wird, wobei $C_x$ den Massenschwerpunkt des Gegenstands in der X-Richtung bezeichnet, $C_y$ den Massenschwerpunkt des Gegenstands in der Y-Richtung bezeichnet, $Wt_i$ einen idealen Lastwert einer Wägezelle bezeichnet, $x_i$ eine Positionskoordinate der Wägezelle in X-Richtung bezeichnet, $y_i$ eine Positions-koordinate der Wägezelle in der Y-Richtung bezeichnet und *i* die *i-te* Wägezelle bezeichnet.

4. Verfahren nach Anspruch 1, **dadurch gekennzeichnet, dass** das proportionale Verhältnis zwischen der Summierung des idealen Lastwerts $\sum_{i=1}^{N} Wt_i$ und der Summierung des tatsächlichen Lastwerts $\sum_{i=1}^{N} w_i$ mit $\sum w_i = \sum Wt_i$ angegeben wird, wobei $Wt_i$ einen idealen Lastwert jeder der N Wägezellen bezeichnet, $w_i$ einen tatsächlichen Lastwert jeder der N Wägezellen bezeichnet und *i* die *i-te* Wägezelle bezeichnet.

5. Verfahren nach Anspruch 1, **dadurch gekennzeichnet, dass** der ideale Lastwert $Wt_i$ basierend auf dem idealen Lastwert $Wt_1$ als $Wt_i = Wt_1 + k_x(x_i - x_1) + k_y(y_i - y_1)$ ausgedrückt wird, wobei $K_x$ einen Schrägstellungskoeffizienten der Wägezellenebene in der X-Richtung angibt, $K_y$ einen Schrägstellungskoeffizienten der Wägezellenebene in der Y-Richtung bezeichnet, $x_i$ eine Positionskoordinate einer Wägezelle in der X-Richtung bezeichnet, $y_i$ eine Positions-koordinate der Wägezelle in der Y-Richtung bezeichnet, *i* die *i-te* Wägezelle bezeichnet, $Wt_i$ einen idealen Lastwert der ausgewählten Wägezelle bezeichnet und $Wt_i$ den idealen Lastwert der (N-1) Wägezellen bezeichnet.

6. Verfahren nach Anspruch 5, **dadurch gekennzeichnet, dass** das Verfahren zum Berechnen des idealen Lastwerts $Wt_i$ jeder der (N-1) Wägezellen den Schrägstellungskoeffizienten $K_x$ in der X-Richtung, den Schrägstellungskoeffizienten $K_y$ in der Y-Richtung und den idealen Lastwert $Wt_1$ der ausgewählten Wägezelle umfasst, und anschließend Wiederholen des Berechnungsschritts so lange, bis alle idealen Lastwerte $Wt_i$ der (N-1) Wägezellen berechnet sind.

7. Verfahren nach Anspruch 6, **dadurch gekennzeichnet, dass** der Schrägstellungskoeffizient $K_x$ in der X-Richtung, der Schrägstellungskoeffizient $K_y$ in der Y-Richtung und der ideale Lastwert $Wt_1$ der Wägezelle durch Lösen eines Gleichungssystems ermittelt werden, wobei das Gleichungssystem wie folgt angegeben ist:

$$\begin{cases} \sum w_i = \sum_{i=1}^{N} Wt_i \\ C_x = \frac{\sum_{i=1}^{N} Wt_i \cdot x_i}{\sum_{i=1}^{N} Wt_i} \\ C_y = \frac{\sum_{i=1}^{N} Wt_i \cdot y_i}{\sum_{i=1}^{N} Wt_i} \\ Wt_i = Wt_1 + K_x (x_n - x_1) + k_y (y_n - y_1) \end{cases}$$

8. Verfahren nach Anspruch 1, **dadurch gekennzeichnet, dass** eine Lastdifferenz zwischen dem idealen Lastwert und dem tatsächlichen Lastwert jeder der N Wägezellen durch $\triangle w_i = Wt_i - w_i$ berechnet wird, wobei $\triangle w_i$ die Lastdifferenz jeder der N Wägezellen bezeichnet, $Wt_i$ einen idealen Lastwert jeder der N Wägezellen bezeichnet, $w_i$ einen tatsächlichen Lastwert jeder der N Wägezellen bezeichnet und *i* die *i-te* Wägezelle bezeichnet.

**9.** Verfahren nach den Ansprüchen 1 und 8, **dadurch gekennzeichnet, dass** für eine Wägezelle mit einer Lastdifferenz mit einem der geringsten Wert eine Dichtung eingebaut wird.

**10.** Verfahren nach Anspruch 1, **dadurch gekennzeichnet, dass** die N Wägezellen des Wägesystems mindestens drei Wägezellen umfassen.

**Revendications**

**1.** Procédé de correction de niveau d'au moins un capteur de force dans un système de pesée, dans lequel ledit système de pesée est configuré pour peser un objet, **caractérisé en ce que** le procédé comprend des étapes suivantes :

   a. l'obtention d'une valeur de charge réelle $w_i$ à partir de N capteurs de force et la réalisation d'une somme des valeurs de charge réelles obtenues à partir des N capteurs de force ;
   b. le calcul de $C_x$ et $C_y$ du centre de masse de l'objet dans une direction X et dans une direction Y sur la base de coordonnées de position $x_i$ et $y_i$ respectivement des N capteurs de force ;

   **caractérisé par** :

   c. la sélection d'un $i^{ème}$ capteur de force ayant une valeur de charge idéale $Wt_1$ parmi les N capteurs de force et l'expression de la valeur de charge idéale $Wt_i$ des (N-1) capteurs de force en termes de valeur de charge idéale $Wt_1$ du capteur de force sélectionné ;
   d. le calcul de la valeur de charge idéale $W_{ti}$ de chaque capteur de force selon une relation de proportionnalité entre une somme des valeurs de charge idéales $\sum_{i=1}^{N} Wt_i$ des N capteurs de force et la somme des valeurs de charge réelles $\sum_{i=1}^{N} w_i$ des N capteurs de force, dans lequel la relation de proportionnalité est basée sur un principe selon lequel le centre de masse de l'objet placé sur un plan horizontal est constant ; et
   e. le calcul d'une différence de charge $\triangle w_i$ entre la valeur de charge idéale $Wt_i$ et la valeur de charge réelle $w_i$ de chacun des N capteurs de force, et la détermination de la différence de charge la plus faible $\triangle w_i$ de N capteurs de force et la délivrance d'une instruction pour corriger le niveau des capteurs de force.

**2.** Procédé selon la revendication 1, **caractérisé en ce que** le centre de masse de l'objet dans la direction X et la direction Y est calculé par $C_x = \dfrac{\sum w_i \cdot x_i}{\sum w_i}$ et $C_y = \dfrac{\sum w_i \cdot y_i}{\sum w_i}$, dans lequel $C_x$ indique le centre de masse de l'objet dans la direction X, $C_y$ indique le centre de masse de l'objet dans la direction Y, $w_i$ indique une valeur de charge réelle d'un capteur de force, xi indique une coordonnée de position du capteur de force dans la direction X, $y_i$ indique une coordonnée de position du capteur de force dans la direction Y, et $i$ indique le $i$-ième capteur de force.

**3.** Procédé selon la revendication 1, **caractérisé en ce que** le centre de masse de l'objet dans la direction X et la direction Y en utilisant la valeur de charge idéale $Wt_i$ du capteur de force est calculé par $C_x = \dfrac{\sum Wt_i \cdot x_i}{\sum Wt_i}$ et $C_y = \dfrac{\sum Wt_i \cdot y_i}{\sum Wt_i}$, dans lequel $C_x$ indique le centre de masse de l'objet dans la direction X, $C_y$ indique le centre de masse de l'objet dans la direction Y, $Wt_i$ indique une valeur de charge idéale d'un capteur de force, $x_i$ indique une coordonnée de position du capteur de force dans la direction X, $y_i$ indique une coordonnée de position du capteur de force dans la direction Y, et $i$ indique le $i^{ème}$ capteur de force.

**4.** Procédé selon la revendication 1, **caractérisé en ce que** la relation de proportionnalité entre la somme de la valeur de charge idéale $\sum_{i=1}^{N} Wt_i$ et la somme de la valeur de charge réelle $\sum_{i=1}^{N} w_i$ est désignée par $\sum w_i = \sum Wt_i$, dans lequel $Wt_i$ indique une valeur de charge idéale de chacun des N capteurs de force, $w_i$ indique une valeur de charge réelle de chacun des N capteurs de force, et $i$ indique un $i^{ème}$ capteur de force.

**5.** Procédé selon la revendication 1, **caractérisé en ce que** la valeur de charge idéale $Wt_i$ est exprimée sur la base de la valeur de charge idéale $Wt_1$ par $Wt_i = Wt_1 + k_x(x_i - x_1) + k_y(y_i - y_1)$, dans lequel $K_x$ indique un coefficient d'inclinaison d'un plan de capteur de force dans la direction X, $K_y$ indique un coefficient d'inclinaison du plan de capteur de force dans la direction Y, $x_i$ indique une coordonnée de position d'un capteur de force dans la direction X, $y_i$ indique une coordonnée de position du capteur de force dans la direction Y, $i$ indique un $i^{ème}$ capteur de force, $Wt_i$ indique une valeur de charge idéale du capteur de force sélectionné, et $Wt_i$ indique la valeur de charge idéale des (N-1) capteurs de force.

6. Procédé selon la revendication 5, **caractérisé en ce que** le procédé de calcul de la valeur de charge idéale $Wt_i$ de chacun des (N-1) capteurs de force comprend le calcul du coefficient d'inclinaison $K_x$ dans la direction X, du coefficient d'inclinaison $K_y$ dans la direction Y, et de la valeur de charge idéale $Wt_1$ du capteur de force sélectionné, puis la répétition de l'étape de calcul jusqu'à ce que toutes les valeurs de charge idéales $Wt_i$ des (N-1) capteurs de force soient calculées.

7. Procédé selon la revendication 6, **caractérisé en ce que** le coefficient d'inclinaison $K_x$ dans la direction X, le coefficient d'inclinaison $K_y$ dans la direction Y, et la valeur de charge idéale $Wt_1$ du capteur de force sont obtenus en résolvant un ensemble d'équations, dans lequel l'ensemble d'équations est désigné par :

$$
\begin{cases}
\sum w_i = \sum\limits_{i=1}^{N} Wt_i \\
C_x = \dfrac{\sum_{i=1}^{N} Wt_i \cdot x_i}{\sum_{i=1}^{N} Wt_i} \\
C_y = \dfrac{\sum_{i=1}^{N} Wt_i \cdot y_i}{\sum_{i=1}^{N} Wt_i} \\
Wt_i = Wt_1 + K_x (x_n - x_1) + k_y (y_n - y_1)
\end{cases}
$$

8. Procédé selon la revendication 1, **caractérisé en ce qu'**une différence de charge entre la valeur de charge idéale et la valeur de charge réelle de chacun des N capteurs de force est calculée par $\triangle w_i = Wt_i - w_i$, dans lequel $\triangle w_i$ indique la différence de charge de chacun des N capteurs de force, $Wt_i$ indique une valeur de charge idéale de chacun des N capteurs de force, $w_i$ indique une valeur de charge réelle de chacun des N capteurs de force, et $i$ indique un $i^{ème}$ capteur de force.

9. Procédé selon les revendications 1 et 8, **caractérisé en ce qu'**un joint est installé pour un capteur de force ayant une différence de charge avec une valeur la plus basse.

10. Procédé selon la revendication 1, **caractérisé en ce que** les N capteurs de force du système de pesée représentent au moins trois capteurs de force.

FIG.1

Obtaining an actual load value $w_i$ from N load cells and performing a summation of the actual load values obtained from the N load cells

$\downarrow$

Calculating centre of mass $C_x$ and $C_y$ of the object in an X direction and in a Y direction based on position coordinates $x_i$ and $y_i$ respectively of the N load cells

$\downarrow$

Selecting an $i^{th}$ load cell having an ideal load value of $Wt_j$ from the N load cells and expressing the ideal load value $Wt_i$ of the (N-1) load cells in terms of the ideal load value $Wt_j$ of the selected load cell

$\downarrow$

Calculating the ideal load value $Wt_i$ of each load cell according to a proportional relationship of a summation of the ideal load values of the N load cells to the summation of the actual load values of the N load cells, wherein the proportional relationship is based on a principle that the centre of mass of the object placed on a horizontal plane is constant

$\downarrow$

Calculating a load difference $\triangle w_i$ between the ideal load value $Wt_i$ and the actual load value $w_i$ of each of the N load cells, and determining the least load difference $\triangle w_i$ of N load cells and output an instruction for correcting the level of the load cells

# FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5679852 B

- JP 2013253834 A